# EUROPÄISCHE PATENTSCHRIFT

(11) **EP 2 868 500 B1**
(45) Veröffentlichungstag und Bekanntmachung des Hinweises auf die Patenterteilung: **13.03.2019**
(21) Anmeldenummer: 14002601.4
(22) Anmeldetag: 25.07.2014
(51) Int. Cl.: B60G 17/019, B60G 9/00, B62D 17/00, B60G 17/0185, B62D 7/20

(54) **System zur Erfassung einer Änderung einer Achseinstellung eines Kraftfahrzeugs**
System for detecting a change in the axle alignment of a motor vehicle
Système de détection d'une modification d'un réglage de géometrie d'essieu d'un véhicule automobile

(30) Priorität: 04.11.2013 DE 102013018526
(43) Veröffentlichungstag der Anmeldung: 06.05.2015
(73) Patentinhaber: MAN Truck & Bus AG, 80995 München (DE)
(72) Erfinder: Wagner, Philipp, 86316 Friedberg (DE); Fleischhacker, Jan, 82140 Olching (DE); Ille, Thomas, 82223 Eichenau (DE); Hipp, Eberhard, 80809 München (DE)
(74) Vertreter: v. Bezold & Partner Patentanwälte - PartG mbB

(56) Entgegenhaltungen:
- DE-A1- 10 252 765
- US-A1- 2005 087 388

## Beschreibung

Die Erfindung betrifft ein System zur Erfassung einer Änderung einer Achseinstellung eines Kraftfahrzeugs. Die Erfindung betrifft insbesondere ein System zur Erfassung eines Überlastzustands im Fahrwerk und/oder einer Veränderung der Achsgeometrie des Fahrzeugs.

Aus dem Stand der Technik ist bekannt, dass missbräuchliche Fahrereignisse, wie das Überfahren von Schlaglöchern oder Bordsteinkanten, eine Änderung der Spureinstellung einer Fahrzeugachse bewirken können, infolgedessen der Kraftstoffverbrauch und Reifenverschleiß ansteigen kann. Derartige Achsverstellungen werden oftmals im normalen Fahrbetrieb nicht vom Fahrer erkannt. Daher wird eine Achsverstellung in der Regel erst im Rahmen einer regelmäßigen, in einer Werkstatt durchgeführten Achsvermessung erkannt. Hierbei ist aus dem Stand der Technik bekannt, eine Achsvermessungsvorrichtung von außen an den Fahrzeugrädern anzubringen, um eine optisch-elektronische Achsvermessung durchzuführen.

Aus der Offenlegungsschrift DE 102 52 765 A1 ist ein Verfahren zum Feststellen einer fehlerhaften Achseinstellung des Fahrzeugs im Fahrbetrieb bekannt. Hierzu wird in einem stationären Fahrzustand einerseits der vom Fahrer an der Lenkhandhabe erzeugte Lenkwinkel erfasst und andererseits ein Kurswinkel des Fahrzeugs aus Giergeschwindigkeitssensoren oder aus Daten des Navigationssystems ermittelt. Überschreitet die Differenz der beiden Winkel einen bestimmten Toleranzschwelle, wird der Fahrer mittels einer Warnmeldung benachrichtigt. Nachteilig an diesem Verfahren ist allerdings, dass dabei Informationen aus verschiedenen Sensortypen kombiniert werden müssen, was anfällig für Fehler ist. Zudem erlauben die Daten aus Navigationssystemen nur eine relativ ungenaue Bestimmung des Kurswinkels.

Aus der US 2005/0087388 A1 ist ein aktives Lenksystem mit einem zwischen Lenkrad und Lenkgetriebe angeordneten Lenkwinkelaktuator bekannt. Dieser kann bei Bedarf einen Zusatzlenkwinkel zu dem vom Fahrer vorgegebenen Lenkwinkel addieren oder subtrahieren und so eine Achsfehlstellungen des Fahrzeugs kompensieren. Um zu ermitteln, ob eine Achsfehlstellung vorliegt, wird allerdings ebenfalls die Differenz aus Lenkwinkel und Kurswinkel des Fahrzeugs erfasst.

Es ist somit eine Aufgabe der Erfindung, eine veränderte Achseinstellung gegenüber der Achseinstellung bei Fahrzeuginbetriebnahme oder Neueinstellung zeitnah und bereits im Fahrbetrieb zu erkennen.

Diese Aufgabe wird durch ein System zur Erfassung einer Änderung einer Achseinstellung eines Kraftfahrzeugs mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die Erfindung umfasst die allgemeine technische Lehre, eine Sensoreinrichtung bereitzustellen, die an einem Lenktrapez eines Fahrwerks des Kraftfahrzeugs, insbesondere an einem Lenktrapez eines Fahrzeugs mit Starrachse, angeordnet ist, und die Sensoreinrichtung so auszubilden, dass diese im Fahrbetrieb des Fahrzeugs wenigstens eine Zustandsgröße des Lenktrapezes erfasst. Ferner ist eine Auswerteeinrichtung vorgesehen, die ausgebildet ist, die wenigstens eine Zustandsgröße und/oder eine davon abhängige Größe mit wenigstens einer Sollzustandsgröße des Lenktrapezes zu vergleichen, um einen Überlastzustand im Lenktrapez und/oder eine Veränderung der Achsgeometrie festzustellen.

Das durch die Sensoreinrichtung und die Auswerteeinrichtung gebildete System kann somit in ein Kraftfahrzeug integriert werden, um im Fahrbetrieb eine Abweichung eines Zustands des Lenktrapezes von seinem Sollzustand zu erfassen, um auf diese Weise einen Überlastzustand im Lenktrapez und/oder eine Veränderung der Achsgeometrie zeitnah zu erfassen, die von einer Änderung der Achseinstellung des Fahrzeugs herrühren.

Gemäß einer bevorzugten Ausführungsform umfasst die Sensoreinrichtung eine Winkelmesseinrichtung, die ausgebildet ist, einen Achsschenkelwinkel als Zustandsgröße des Lenktrapezes zu erfassen. Gemäß diesem Ausführungsbeispiel ist die Auswerteeinrichtung ferner ausgebildet, in Abhängigkeit des erfassten Achsschenkelwinkels einen aktuellen Wert der Vorspur zu bestimmen und diesen mit einem Sollwinkel der Vorspur als Sollzustandsgröße zu vergleichen, um eine Veränderung der Achsgeometrie festzustellen. Der Sollwert der Vorspur entspricht dem Wert der Vorspur bei Fahrzeuginbetriebnahme oder dem Wert der Vorspur nach einer Neujustierung der Spur. Der Vorspurwinkel ist der Spurwinkel bei Lenkradwinkelstellung geradeaus.

Die Sensoreinrichtung ist vorzugsweise eingerichtet, den Achsschenkelwinkel in regelmäßigen Abständen oder kontinuierlich während der Fahrt zu erfassen, so dass eine Änderung des Achsschenkelwinkels bzw. Veränderung der Vorspur zeitnah erfasst werden kann und ein Mittelwert der gemessen Achsschenkelwinkel in einem vorbestimmten Zeitintervall gebildet werden kann.

Vorzugsweise wird der Achsschenkelwinkel als Winkel zwischen dem Achsschenkel und dem Achskörper des Lenktrapezes gemessen. Eine Alternative wäre jedoch auch, den Achsschenkelwinkel als Winkel zwischen dem Achsschenkel und der Spurstange zu erfassen.

Bei einer bevorzugten Variante dieser Ausgestaltungsform ist die Winkelmesseinrichtung ausgebildet, die Achsschenkelwinkel beider Achsschenkel des Lenktrapezes zu erfassen. Vorzugsweise wird somit der Winkel der Achsschenkel eines Rades jeder Radachse zu dem Achskörper der Radachse gemessen. Hierzu ist ein Winkelmesssensor an jeder der beiden Endbereiche des Achskörpers angeordnet, an denen jeweils einer der beiden Achsschenkel an den Achskörper schwenkbar angelenkt ist.

Die Auswerteeinrichtung ist gemäß dieser Variante ausgebildet, den aktuellen Wert der Vorspur mittels der erfassten Werte beider Achsschenkelwinkel zu bestimmen. Hierbei ist es vorteilhaft, gemittelte Werte der Achsschenkelwinkel zu verwenden, so dass kurzzeitige Schwankungen oder Belastungsspitzen im Fahrbetrieb das Messergebnis nicht verfälschen.

Gemäß einer Ausführungsvariante verwendet die Auswerteeinrichtung für die Bildung eines Mittelwerts der erfassten Achsschenkelwinkel nur Achsschenkelwinkel, die bei einem Lenkwinkel von Null von der Winkelmesseinrichtung erfasst wurden. Ein Lenkwinkel von Null entspricht einer Geradeausfahrt.

Dies hat den Vorteil, dass der gemessene Wert des Achsschenkelwinkels des linken Achsschenkels und der gemessene Wert des Achsschenkelwinkels des rechten Achsschenkels einer Radachse nicht durch den unterschiedlichen Radeinschlag überlagert werden, der bei einem Lenkwinkel ungleich Null auftritt. Damit kann der aktuelle Wert der Vorspur direkt aus den gemessenen Achsschenkelwinkeln als die Differenz der beiden Messwerte erhalten werden. Hierbei ist es wiederum vorteilhaft, die links- und rechtsseitigen Achsschenkelwinkel jeweils als gemittelte Werte zu bestimmen.

Gemäß einer weiteren vorteilhaften Ausführungsvariante ist es jedoch auch möglich, den aktuellen Wert der Vorspur mittels gemittelter Werte der Achsschenkelwinkel zu bestimmen, die auch bei Lenkwinkeln bzw. Lenkradwinkeln ungleich Null erfasst werden. Gemäß dieser Variante ist die Auswerteeinrichtung ausgebildet, den durch einen Lenkwinkel ungleich Null bedingten Radeinschlag mittels eines kinematischen Modells der Lenkkinematik bei der Bestimmung der Vorspur zu berücksichtigen. Das kinematische Modell setzt hierbei die von der Sensoreinrichtung erfassten Achsschenkelwinkel und die jeweiligen Lenkwinkel, bei denen die Achsschenkelwinkel gemessen werden, in einen funktionalen Zusammenhang zur Vorspur. Solch ein kinematisches Modell der Lenkkinematik kann vorab experimentell oder rechnerisch bestimmt und mittels Kennfeldern oder Kennwerten in der Auswerteeinrichtung hinterlegt werden. Gemäß dieser Ausführungsvariante ist die Auswerteeinrichtung eingerichtet, anhand der von der Sensoreinrichtung übermittelten Achsschenkelwinkel und dem jeweiligen Lenkwinkel mittels dem kinematischen Modell einen aktuellen Wert der Vorspur zu bestimmen, der dann mit einem hinterlegten Sollwert der Vorspur verglichen wird.

Eine weitere Variante der oben genannten Ausgestaltungsform sieht vor, dass die Winkelmesseinrichtung nur einen Winkelmesssensor umfasst, der ausgebildet ist, einen ersten Achsschenkelwinkel auf einer der Lenkanlage gegenüberliegenden Seite zu erfassen. Bei einem Linkslenker wird somit der Achsschenkelwinkel bzw. Radlenkwinkel auf der rechten Seite, d. h. auf der vom Lenkrad abgewandten Seite, erfasst. Bei einem Rechtslenker wird entsprechend der Achsschenkelwinkel auf der linken Seite erfasst. Ferner wird ein Lenkradwinkel bestimmt, in dessen Abhängigkeit die Auswerteeinrichtung dann den zweiten Achsschenkelwinkel auf der Seite der Lenkanlage bestimmt. Dies hat den Vorteil, dass nur ein Winkelsensor vonnöten ist, der auf der gegenüberliegenden Seite der Lenkanlage am Achsschenkel angeordnet ist.

Gemäß einer weiteren vorteilhaften Ausgestaltungsform der Erfindung umfasst die Sensorvorrichtung einen Kraftsensor, der eine im Lenktrapez auftretende Kraft als Zustandsgröße des Lenktrapezes erfasst. Hierbei ist die Auswerteeinrichtung ausgebildet, die von dem Kraftsensor erfasste Kraft mit einem vorbestimmten Kraftschwellwert zu vergleichen, um einen Überlastzustand im Lenktrapez zu bestimmen.

Gemäß dieser Variante ist es möglich, spurverändernde Sonderlasten bzw. Kräfte im Fahrbetrieb zu messen, die über die üblichen im Lenktrapez auftretenden Kräfte hinaus gehen und die eine Spurveränderung bewirken können oder die ein Indiz dafür sind, dass bereits eine Spurverstellung eingetreten ist. Hierbei ist besonders vorteilhaft, wenn der Kraftsensor an der Spurstange angeordnet ist und eine auf die Spurstange wirkende Kraft misst, da die oben genannten Überlastzustände an der Spurstange gemessen werden können.

Eine weitere vorteilhafte Variante dieser Ausführungsform sieht vor, nach einem Überschreiten des Kraftschwellwerts durch die im Lenktrapez auftretende Kraft zu ermitteln, ob eine gemittelte Kraft im Lenktrapez nach dem Überschreiten des Kraftschwellwerts, d.h. nach Abklingen des kurzzeitigen Belastungspeaks, größer ist als eine gemittelte Kraft im Lenktrapez, die vor dem Überschreiten des Kraftschwellwerts erfasst wurde. Mit anderen Worten wird beim Auftreten einer Belastungsspitze geprüft, ob die mittlere Kraft im Lenktrapez nach dem Auftreten des Kraftpeaks wieder auf den mittleren Wert der im Lenktrapez auftretenden Kräfte vor Auftreten des Kraftpeaks zurückfällt. Ist dies nicht der Fall, d.h. sind die im Lenktrapez auftretenden Kräfte größer als die Kräfte vor dem Auftreten des Kraftpeaks, kann von einer Spurverstellung ausgegangen werden. Dieser Ansatz ermöglicht ein besonders genaues Erkennen von Veränderungen der Achsgeometrie, insbesondere von Spuränderungen.

Es ist hierbei besonders vorteilhaft, wenn die gemittelten Kräfte im Lenktrapez vor und nach dem Auftreten der Belastungsspitze Kräften entsprechen, die bei Geradeausfahrt, also bei einem Lenkwinkel gleich Null, gemessen werden, um so zu verhindern, dass Belastungen durch Kurvenfahrten etc. das Ergebnis nicht verfälschen.

Die Lenkwinkel- oder Lenkradwinkelmessung der vorgenannten Ausführungsvarianten findet außerhalb des Lenktrapezes statt. Vorzugsweise wird hierbei auf die bereits im Fahrzeug vorhandene Sensorik, z.B. eine ESP-Messeinrichtung, zurückgegriffen, die entsprechende Messwerte an die Auswerteeinrichtung übermittelt. Ferner ist es möglich, eine Geradeausfahrt durch Vergleiche der einzelnen Raddrehzahlen der Vorderachse zu ermitteln, die beispielsweise über die vorhandenen ABS-Sensoren in hoher Auflösung vorliegen.

Gemäß einer weiteren Ausgestaltungsform kann die Auswerteeinrichtung ausgebildet sein, eine Differenz der gemessenen Spurstangenkräfte bei Vorwärts- und Rückwärtsfahrt zu bilden und diese Differenz mit einer Solldifferenz der Spurstangenkräfte bei Vorwärts- und Rückwärtsfahrt zu vergleichen. Durch eine definierte Spureinstellung ergeben sich bei langsamer Vorwärts- und Rückwärtsfahrt unterschiedliche Spurstangenkräfte. Kommt es zu einer Veränderung der Spureinstellung, so verändert sich auch die Differenz der Spurstangenkräfte zwischen Vorwärts- und Rückwärtsfahrt. Wenn diese, wie vorstehend beschrieben, gemessen und überwacht wird, kann aus einer Veränderung der Differenz der Spurstangenkräfte zwischen Vorwärts- und Rückwärtsfahrt auf einen Überlastzustand im Lenktrapez und/oder eine Veränderung der Achsgeometrie geschlossen werden.

Vorzugsweise werden hierbei nur die Spurstangenkräfte bei Vorwärts- und Rückwärtsfahrt zur Differenzbildung verwendet, die in einem vorbestimmten langsamen Geschwindigkeitsbereich gemessen werden, der den typischen Geschwindigkeiten von Rangierfahrten, z. B. Ein- und Ausparken des Fahrzeugs, entspricht.

Gemäß einem weiteren Aspekt der Erfindung erfolgt die Erfassung und/oder Verwendung von Sensordaten bzw. die Verwendung der Sensordaten, anhand derer ein Überlastzustand und/oder eine Veränderung der Achsgeometrie erfolgt, nur für Fahrzustände, die keine hohe oder außergewöhnliche Belastung für das Fahrwerk bewirken. Ein derartiger Fahrzustand mit einer hohen bzw. außergewöhnlichen Belastung des Fahrwerks ist ein Anfahr- und/oder ein Bremsvorgang. Derartige Fahrzustände erzeugen kurzzeitige überdurchschnittliche Belastungen auf das Fahrwerk. Um eine Beeinflussung der erfassten Sensordaten durch solche Fahrzustände zu vermeiden, ist das erfindungsgemäße System vorzugsweise eingerichtet, derartige Fahrzustände, beispielsweise anhand der Daten eines Beschleunigungssensors oder der sensorischen Erfassung der Gas- und/oder Bremspedalstellung, des aktuellen Gangs, eines Gangwechsels, und/oder der Fahrgeschwindigkeit, zu erkennen und die Erfassung und/oder Verwendung der Sensordaten in diesen Fahrzuständen zu unterdrükken.

Gemäß einem weiteren Aspekt der vorliegenden Erfindung ist das System eingerichtet, ein Warnsignal auszugeben, falls eine Abweichung der wenigstens einen Zustandsgröße von der wenigstens einen Sollzustandsgröße einen Schwellwert überschreitet. Die erfindungsgemäße Auswerteeinrichtung kann als separate Auswerteeinrichtung bereitgestellt werden oder in Form von entsprechender Software auf einem bereits vorhandenen Steuergerät des Fahrzeugs integriert werden.

Gemäß einem weiteren Aspekt betrifft die Erfindung ein Fahrzeug, insbesondere ein Nutzfahrzeug, insbesondere mit Starrachse, umfassend ein System zur Erfassung einer Änderung der Achseinstellung gemäß der vorstehend beschriebenen Aspekte.

Weitere Einzelheiten und Vorteile der Erfindung werden im Folgenden unter Bezug auf die beigefügten Zeichnungen beschrieben. Es zeigen:
- Figur 1: eine schematische Ansicht eines Lenktrapezes mit Sensoreinrichtung mit korrekt eingestellter Spur gemäß einem Ausführungsbeispiel;
- Figur 2: das Lenktrapez aus Figur 1 mit verstellter Spur; und
- Figur 3: eine schematische Ansicht eines Systems zur Erfassung einer Änderung einer Achseinstellung gemäß einem Ausführungsbeispiel.

Die Erfindung ist hinsichtlich des konstruktiven Aufbaus des Lenktrapezes, dessen Achseinstellung überwacht wird, nicht auf einen bestimmten Aufbau beschränkt. Allerdings kann das Lenktrapez verschiedene Komponenten umfassen, die nachfolgend kurz beschrieben werden.

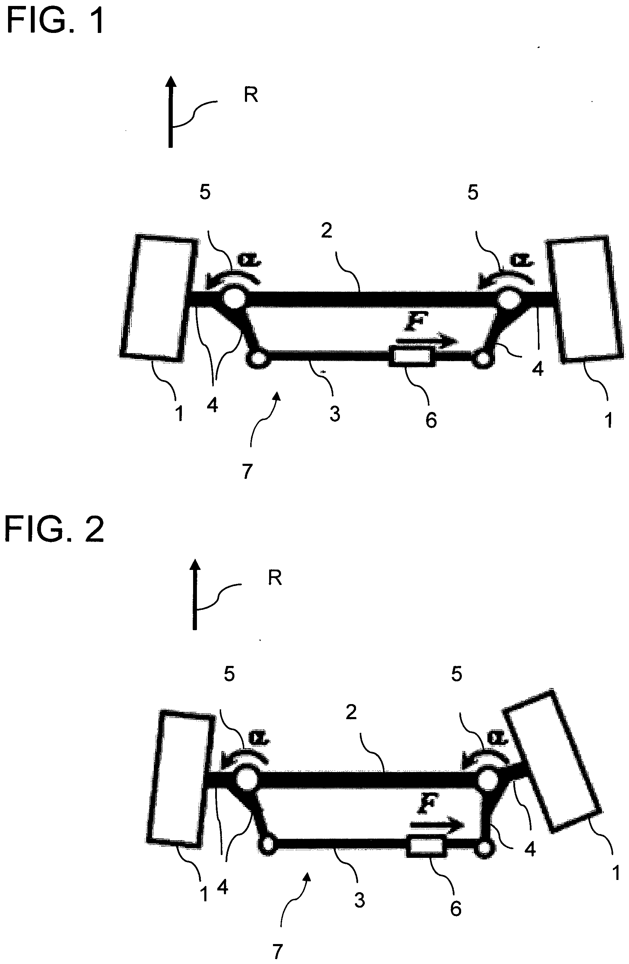

Figur 1 zeigt ein Lenktrapez 7 einer lenkbaren Starrachse, wobei die Radnaben beider Räder 1 einer Achse drehbar mit dem starren Achskörper 2 verbunden sind. An dem starren Achskörper 2, der quer zur Fahrzeuglängsachse (nicht gezeigt) angeordnet ist, sind in an sich bekannter Weise über schwenkbare Achsschenkel 4 gelagerte, in ihrem Lenkwinkel verstellbare, lenkbare Räder 1 angeordnet. An dem Ende der Achsschenkel 4, das nicht mit den Rädern 1 in Verbindung steht, ist eine Spurstange 3 angelenkt. Die Spurstange 3 kann einteilig oder auch mehrteilig (nicht gezeigt) ausgebildet sein.

Ein Lenktrapez 7, bestehend aus Achskörper 2, Spurstange 3 und den beiden Achsschenkeln 4, ist an sich aus dem Stand der Technik bekannt und muss hier nicht weiter beschrieben werden.

Gemäß dem in Figur 1 gezeigten Ausführungsbeispiel ist eine Winkelmesseinheit 5 am Lenktrapez 7 angeordnet, insbesondere an der Stelle, an der ein Achsschenkel 4 am Achskörper 2 angelenkt ist. Die Winkelmesseinheit 5 misst im Fahrbetrieb kontinuierlich einen Winkel α zwischen dem Achsschenkel 4 und dem Achskörper 2. Je nach Ausführungsform kann nur eine Winkelmesseinheit 5, die den Winkel α eines der beiden Achsschenkel 4 zum Achskörper 2 misst, vorgesehen sein oder auch zwei derartige Winkelmesseinheiten 5, so dass an beiden Anlenkpunkten des Achskörpers 2 zu einem Achsschenkel 4 jeweils ein Winkelmesssensor 5 vorgesehen ist. In letzterem Fall wird an jedem Achsschenkel ein Winkel α gemessen, so dass die Werte für α an jedem Achsschenkel normalerweise unterschiedliche Werte aufweisen. Die Winkelsensoren sind am Achsgelenk beliebig anordenbar.

Figur 1 zeigt weiterhin eine Kraftmesseinheit 6, die an der Spurstange 3 angeordnet ist, um die in der Spurstange 3 wirkende Kraft F zu erfassen. Die Kraftmesseinheit 6 kann an unterschiedlichen Stellen entlang der Spurstange angeordnet werden.

Es wird betont, dass eine Achsverstellung auch nur mit wenigstens einer Winkelmesseinheit 5 und ohne Kraftmesseinheit 6 erfolgen kann bzw. nur mit einer Kraftmesseinheit 6 und ohne wenigstens eine Winkelmesseinheit 5, wie nachfolgend noch detaillierter erläutert wird.

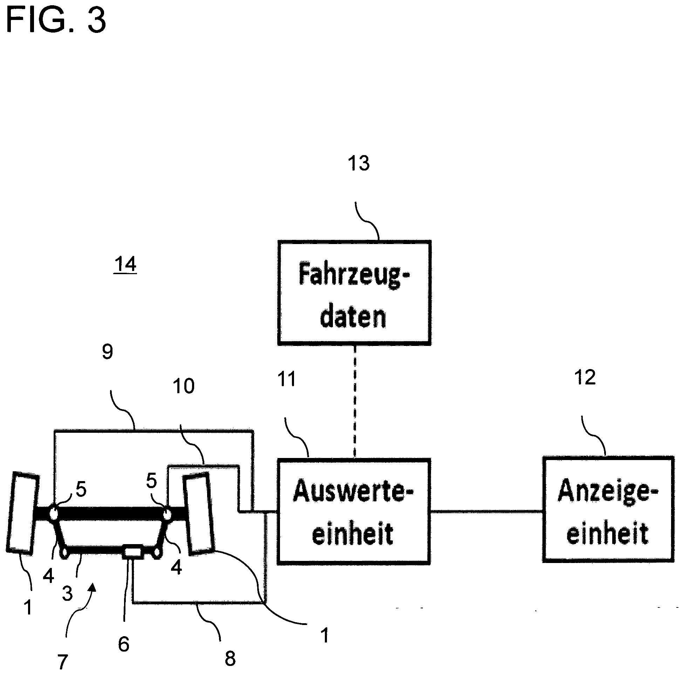

Figur 2 zeigt das Lenktrapez 7 aus Figur 1, jedoch mit verstellter Spur, wobei eine Achseinstellung am rechten Rad 1 verstellt ist. Die Achsverstellung wie auch die normale Vorspur sind zur Veranschaulichung übertrieben dargestellt. Die Achsverstellung an der rechten Radaufhängung führt zu einem veränderten Achsschenkelwinkel α am rechten Achsschenkel 4, der durch den Winkelsensor 5 am rechten Achsschenkel 4 gemessen werden kann. Ferner resultiert die Achsverstellung in einer veränderten Spurstangenkraft F, die im vorliegenden Ausführungsbeispiel mit der in Figur 1 gezeigten Kraftmesseinheit 6 gemessen werden kann. Dies wird nachfolgend unter Bezugnahme auf die Figur 3 für verschiedene Ausführungsbeispiele erläutert.

Figur 3 zeigt schematisch ein System 14 zur Erfassung einer Änderung einer Achseinstellung. Hierbei sind die zuvor beschriebenen Winkelmesseinheiten 5 an beiden Achsschenkelgelenken jeweils über Signalleitungen 9 und 10 mit einer Auswerteeinrichtung 11 verbunden. Ebenso ist die zuvor beschriebene Kraftmesseinheit 6 über eine Signalleitung 8 mit der Auswerteeinrichtung 11 verbunden.

Die Auswerteeinrichtung 11 überwacht, ob die von der wenigstens einen Winkelmesseinheit 5 und/oder der Kraftmesseinheit 6 erfassten Zustandsgrößen von den in der Auswerteeinrichtung 11 hinterlegten Sollwerten abweichen. Überschreitet die Abweichung einen Schwellwert, kann auf einen Überlastzustand bzw. eine Veränderung der Achsgeometrie im Lenktrapez 7 geschlossen werden. Wird auf diese Weise ein Überlastzustand bzw. eine Veränderung der Achsgeometrie ermittelt, löst die Auswerteeinrichtung 11 eine Warnung aus, z. B. durch Anzeige einer Warnmeldung auf der Anzeigeeinheit 12. Dies wird nachfolgend anhand verschiedener Ausführungsbeispiele detaillierter erläutert.

In Neutralstellung der Lenkung, d. h bei Geradeausfahrt, entspricht die aktuell eingestellte Vorspur der Differenz der beiden Messwerte für die Achsschenkelwinkel a. Bei Lenkwinkeln ungleich Null, d.h. bei eingeschlagenem Lenkrad, wird die Vorspur jedoch durch den unterschiedlichen Radeinschlag überlagert und ist ohne hinterlegtes kinematisches Modell nicht mehr direkt zu detektieren.

Gemäß einem Ausführungsbeispiel werden daher nur Achsschenkelwinkel α zur Überwachung der Achsgeometrie verwendet, die bei einem Lenkwinkel gleich Null gemessen werden. Alternativ können die Winkelmesseinheiten 5 von der Auswerteeinheit 11 so angesteuert werden, dass diese nur dann eine Achsschenkelwinkelmessung ausführen, wenn der Lenkwinkel gleich Null ist.

Hierzu überwacht die Auswerteeinheit den aktuellen Lenkwinkel oder auch Lenkradwinkel. Die Sensorik hierfür ist im Fahrzeug gegebenenfalls schon vorhanden, beispielsweise die Lenkwinkeldaten, die für das Elektronische Stabilitätsprogramm (ESP) ermittelt werden. Die Geradeausfahrt kann auch durch Vergleiche der einzelnen Raddrehzahlen der Vorderachse ermittelt werden, die über die vorhandenen ABS-Sensoren in hoher Auflösung vorliegen. Über eine Differenzbildung beider Winkel wird eine Kurvenfahrt erkannt. Die Auswerteeinheit 11 nutzt daher vorteilhafterweise bereits vorhandene Fahrzeugdaten 13 und Sensorik, beispielsweise die Lenkwinkeldaten des Elektronischen Stabilitätsprogramms (ESP) oder Daten der ABS-Sensoren. Derartige Sensorik ist an sich aus dem Stand der Technik bekannt, daher wird dies nicht gesondert in den Zeichnungen aufgeführt.

Die Auswerteeinrichtung 11 bildet über die gemessenen Werte für den Achsschenkelwinkel α des linken und des rechten Achsschenkelwinkels jeweils einen Mittelwert. Aus der Differenz der beiden Mittelwerte bestimmt die Auswerteeinheit 11 einen gleitenden Mittelwert der aktuellen Vorspur.

Dieser wird dann von der Auswerteeinrichtung 11 gegen einen hinterlegten Sollwert der Vorspur, wie er bei der Fahrzeuginbetriebnahme oder nach der letzten Neujustierung der Sollspur eingestellt wurde, verglichen. Weicht die ermittelte aktuelle Vorspur von dem in der Auswerteeinrichtung 11 hinterlegten Sollwert der Vorspur um mehr als einen vorbestimmten Schwellwert ab, gibt die Auswerteeinrichtung an einer Anzeigeeinheit 12 eine Warnmeldung aus, so dass die verstellte Achsgeometrie zeitnah justiert werden kann.

Gemäß einem alternativen Ausführungsbeispiel ist es auch möglich, den aktuellen Wert der Vorspur auf Basis von Messwerten für die Achsschenkelwinkel α zu bestimmen, die bei beliebigen Lenkwinkeln, insbesondere bei Lenkwinkeln ungleich Null, gemessen werden. Eine Besonderheit dieses Ausführungsbeispiels besteht darin, dass die Auswerteeinrichtung 11 eingerichtet ist, den vom Lenkwinkel abhängigen Radeinschlag, der die Messung der Vorspur überlagert, über ein Modell der Lenkkinematik zu berücksichtigen und den aktuellen Wert der Vorspur aus den erfassten Achslenkwinkeln α herauszurechnen. Anschließend erfolgt wieder, wie zuvor beschrieben, eine Prüfung des aktuellen Werts der Vorspur mit dem hinterlegten Sollwert.

Gemäß einem weiteren Ausführungsbeispiel kann auch nur ein Achsschenkelwinkel α gemessen werden, und zwar derjenige, der sich gegenüber der Lenkanlage befindet, also beispielsweise rechts bei einem Linkslenker. Hierbei bestimmt die Auswerteeinrichtung 11 über eine Messung des Lenkradwinkels dann den Achsschenkelwinkel a, der auf der Seite der Lenkanlage liegt. Anschließend erfolgt wieder, wie zuvor beschrieben, eine Prüfung des aktuellen Werts der Vorspur mit dem hinterlegten Sollwert.

Gemäß weiteren Ausführungsvarianten ist es ferner möglich, eine Verstellung der Achsgeometrie bzw. einen Überlastzustand im Lenktrapez alternativ oder zusätzlich mittels einer kraftbasierten Messung festzustellen. Hierbei wird in Versuchen vorab experimentell eine kritische Belastungsgrenze ermittelt, die zu einer bleibenden Spurverstellung führt. Dieser Wert für die kritische Belastungsgrenze wird in der Auswerteeinrichtung 11 als Kraftschwellwert hinterlegt.

Während der Fahrt wird dann die Spurstangenkraft F mittels des Kraftsensors 6 kontinuierlich erfasst. Stellt die Auswerteeinrichtung 11 fest, dass die ermittelten Spurstangenkräfte F den hinterlegten Schwellenwert für die Belastungsgrenze überschreiten, kann eine Spurverstellung eingetreten sein. Je nachdem wie stark der Schwellwert überschritten wird, erhöht sich die Wahrscheinlichkeit für eine eingetretene Spurverstellung.

Um die Vorhersagegenauigkeit zu erhöhen, ist die Auswerteeinrichtung 11 ferner eingerichtet, die mittlere Spurstangenkraft, die vor einem Überschreiten des Kraftschwellwerts der Belastungsgrenze gemessen wurde, mit einer mittleren Spurstangenkraft zu vergleichen, die nach diesem Ereignis gemessen wird.

Ist keine Spurverstellung eingetreten, sollte die mittlere Spurstangenkraft nach dem Ereignis wieder auf den Wert vor dem Ereignis zurückgehen. Unterscheiden sich jedoch die mittleren gemessenen Spurstangenkräfte nach dem Ereignis von den mittleren Spurstangenkräften, die vor dem Ereignis gemessen wurden, so kann von einer Spurverstellung mit hoher Sicherheit ausgegangen werden.

Um die Vorhersagegenauigkeit weiter zu erhöhen, können die mittleren Spurstangenkräfte vor dem Ereignis und die mittleren Spurstangenkräfte nach dem Ereignis jeweils nur bei Geradeausfahrt ermittelt werden, um die Messergebnisse nicht durch die in Kurvenfahrten auftretenden Sonderkräfte zu beeinflussen.

Eine weitere Realisierungsmöglichkeit sieht vor, in Versuchen oder Berechnungen vorab für mögliche Beladungszustände des Fahrzeugs, d.h. bei verschiedenen Achslasten, Kraftwerte in der Spurstange zu bestimmen, die korrekten Spureinstellungen oder verstellten Spureinstellungen entsprechen, um so einen Bereich normaler zulässiger Spurstangenkräfte zu ermitteln. Diese können dann beispielsweise in Form von Kennfeldern oder Kennwerten in der Auswerteeinrichtung 11 hinterlegt werden. Im Fahrbetrieb ermittelt dann die Auswerteeinrichtung 11 den aktuellen Beladungszustand des Fahrzeugs, z. B. mittels eines Gewichtssensors (nicht gezeigt), und vergleicht die ermittelten Mittelwerte der Spurstangenkraft F mit dem vorab ermittelten Bereich der Spurstangenkraft für den aktuellen Beladungszustand. Verlassen die aktuell ermittelten Spurstangenkräfte F den vorab ermittelten Sollbereich, kann wiederum von einer Spurverstellung ausgegangen werden. Damit kann insbesondere für Nutzfahrzeuge mit stark variierenden Beladungszuständen zuverlässig unterschieden werden, ob die im Lenktrapez mittels des Kraftsensors 6 gemessenen Kräfte durch einen Beladungszustand oder durch eine verstellte Achse erzeugt werden.

Gemäß einer weiteren Ausführungsform ist die Auswerteeinheit 11 ausgebildet, die Differenz der Spurstangenkräfte bei langsamer Vorwärts- und Rückwärtsfahrt zu erfassen. Die Erfinder haben festgestellt, dass sich durch eine definierte Spureinstellung bei langsamer Vorwärts- und Rückwärtsfahrt unterschiedliche Spurstangenkräfte ergeben. Kommt es zu einer Änderung der Spureinstellung, so verändert sich auch diese Differenz der Spurstangenkräfte zwischen Vorwärts- und Rückwärtsfahrt. Hierbei wird vorab ein zulässiger Bereich von Spurstangenkräften definiert, ebenso wie ein Geschwindigkeitsbereich für die im normalen Fahrbetrieb auftretenden Rangierfahrten, die zur Vorspurmessung herangezogen werden. Die Auswerteeinheit 11 ist in dieser Variante eingerichtet, in dem vorab festgelegten langsamen Geschwindigkeitsbereich eine Differenz der vom Kraftsensor 6 gemessenen Spurstangenkräfte F jeweils bei Vorwärts- und Rückwärtsfahrt zu bilden und mit dem hierzu entsprechend hinterlegten Sollwert zu vergleichen.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Insbesondere können die vorbenannten Varianten einzeln oder in Kombination zu einer Erfassung einer Änderung einer Achseinstellung verwendet werden. Ferner kann das erfindungsgemäße System, bestehend aus der Sensoreinrichtung und der Auswerteeinrichtung, bei einer Vielzahl von konstruktiv unterschiedlichen Fahrzeugachsen eingesetzt werden. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Rad
- 2: Achskörper
- 3: Spurstange
- 4: Achsschenkel
- 5: Winkelmesseinheit
- 6: Kraftmesseinheit
- 7: Lenktrapez
- 8, 9, 10: Steuerleitung
- 11: Auswerteeinrichtung
- 12: Anzeigeeinheit
- 13: Fahrzeugdaten
- 14: System

## Patentansprüche

1. System zur Erfassung einer Änderung einer Achseinstellung eines Kraftfahrzeugs, insbesondere der Änderung der Achseinstellung einer Starrachse, **dadurch gekennzeichnet, dass** das System folgende Merkmale umfasst:
- eine Sensoreinrichtung, die an einem Lenktrapez eines Fahrwerks des Kraftfahrzeugs angeordnet ist und ausgebildet ist, im Fahrbetrieb des Fahrzeugs wenigstens eine Zustandsgröße des Lenktrapezes zu erfassen; und
- eine Auswerteeinrichtung (11), die ausgebildet ist, die erfasste wenigstens eine Zustandsgröße und/oder eine davon abhängige Größe mit wenigstens einer Sollzustandsgröße des Lenktrapezes (7) zu vergleichen, um einen Überlastzustand im Lenktrapez (7) und/oder eine Veränderung der Achsgeometrie zu erfassen.

2. System nach Anspruch 1, **dadurch gekennzeichnet,**
a) **dass** die Sensoreinrichtung eine Winkelmesseinrichtung (5) umfasst, die ausgebildet ist, einen Achsschenkelwinkel (a) des Lenktrapezes zu erfassen, und
b) **dass** die Auswerteeinrichtung (11) ausgebildet ist, in Abhängigkeit des erfassten Achsschenkelwinkels (a) einen aktuellen Wert der Vorspur zu bestimmen und diesen mit einem Sollwert der Vorspur zu vergleichen, um eine Veränderung der Achsgeometrie festzustellen.

3. System nach Anspruch 2, **dadurch gekennzeichnet,**
a) **dass** die Winkelmesseinrichtung (5) ausgebildet ist, die Achsschenkelwinkel (a) beider Achsschenkel (4) des Lenktrapezes (7) zu erfassen, und
b) **dass** die Auswerteeinrichtung (11) ausgebildet ist, den aktuellen Wert der Vorspur mittels gemittelter Werte der Achsschenkelwinkel (α), die bei einem Lenkwinkel von Null von der Winkelmesseinrichtung (5) erfasst werden, zu bestimmen.

4. System nach Anspruch 2, **dadurch gekennzeichnet,**
a) **dass** die Winkelmesseinrichtung (5) ausgebildet ist, die Achsschenkelwinkel (a) beider Achsschenkel (4) des Lenktrapezes (7) zu erfassen, und
b) **dass** die Auswerteeinheit (11) ausgebildet ist, den aktuellen Wert der Vorspur mittels gemittelter Werte der Achsschenkelwinkel (α) zu bestimmen, die bei Lenkwinkeln ungleich Null erfasst werden, wobei ein durch einen Lenkwinkel ungleich Null bedingter Radeinschlag mittels eines kinematischen Modells der Lenkkinematik bei der Bestimmung der Vorspur berücksichtigt wird.

5. System nach Anspruch 2, **dadurch gekennzeichnet,**
a) **dass** die Winkelmesseinrichtung (5) einen ersten Achsschenkelwinkel (a) auf einer der Lenkanlage gegenüberliegenden Seite erfasst und das System ferner ausgebildet ist, einen Lenkwinkel zu bestimmen, und
b) **dass** die Auswerteeinheit (11) ausgebildet ist, in Abhängigkeit des erfassten Lenkwinkels einen zweiten Achsschenkelwinkel (a) auf der Seite der Lenkanlage zu bestimmen.

6. System nach einem der vorhergehenden Ansprüche, **dadurch gekennzeichnet,**
a) **dass** die Sensoreinrichtung einen Kraftsensor (6) umfasst, der eine im Lenktrapez (7) auftretende Kraft erfasst, und
b) **dass** die Auswerteeinrichtung (11) die erfasste Kraft mit einem vorbestimmten Kraftschwellwert vergleicht, um einen Überlastzustand im Lenktrapez (7) zu bestimmen.

7. System nach Anspruch 6, **dadurch gekennzeichnet, dass** der Kraftsensor (6) eine auf die Spurstange (3) wirkende Kraft (F) erfasst.

8. System nach Anspruch 6 oder 7, **dadurch gekennzeichnet, dass** die Auswerteeinheit (11) ausgebildet ist, nach einem Überschreiten des Kraftschwellwerts durch die im Lenktrapez (7) auftretenden Kraft (F) zu ermitteln, ob eine gemittelte Kraft im Lenktrapez (7) nach dem Überschreiten des Kraftschwellwerts, insbesondere bei Geradeausfahrt, größer ist als eine gemittelte Kraft im Lenktrapez (7), die vor dem Überschreiten des Kraftschwellwerts erfasst wurde.

9. System nach einem der vorhergehenden Ansprüche 6 bis 8, **dadurch gekennzeichnet, dass** die Auswerteeinheit (11) den Kraftschwellwert in Abhängigkeit eines Beladungszustandes und/oder einer Achslast des Fahrzeugs bestimmt.

10. System nach einem der vorhergehenden Ansprüche 7 bis 9, **dadurch gekennzeichnet, dass** die Auswerteeinheit eine Differenz der Spurstangenkräfte bei Vorwärts- und Rückwärtsfahrt bildet, und der Kraftschwellwert eine Solldifferenz der Spurstangenkräfte (F) bei Vorwärts- und Rückwärtsfahrt ist.

11. System nach Anspruch 10, **dadurch gekennzeichnet, dass** die Auswerteeinheit (11) Spurstangenkräfte (F) bei Vorwärts- und Rückwärtsfahrt zur Differenzbildung verwendet, die in einem vorbestimmten Geschwindigkeitsbereich auftreten, wobei der vorbestimmte Geschwindigkeitsbereich so festgelegt ist, dass dieser den typischen Geschwindigkeiten von Rangierfahrten entspricht.

12. System nach einem der vorhergehenden Ansprüche, **dadurch gekennzeichnet, dass** die Erfassung oder Verwendung von Sensordaten zur Bestimmung des Überlastzustands im Lenktrapez (7) und/oder der Veränderung der Achsgeometrie nur für Fahrzustände erfolgt, die keine hohe Belastung für das Fahrwerk bewirken.

13. System nach Anspruch 12, **dadurch gekennzeichnet, dass** ein Fahrzustand mit einer hohen Belastung des Fahrwerks ein Anfahr- und/oder ein Bremsvorgang ist.

14. System nach einem der vorhergehenden Ansprüche, **dadurch gekennzeichnet, dass** das System eingerichtet ist, ein Warnsignal auszugeben, falls eine Abweichung der wenigstens einen Zustandsgröße von der wenigstens einen Sollzustandsgröße einen Schwellwert überschreitet.

15. Fahrzeug, insbesondere Nutzfahrzeug, umfassend ein System zur Erfassung einer Änderung einer Achseinstellung nach einem der Ansprüche 1 bis 14.

## Claims

1. A system for detecting a change in an axle adjustment of a motor vehicle, in particular the change in the axle adjustment of a rigid axle **characterized in that** the system comprises the following features:
- a sensor device which is arranged on a steering trapezoid of a chassis of the motor vehicle and is designed to detect at least one state variable of the steering trapezoid during the driving operation of the vehicle; and
- an evaluation device (11) which is designed to compare the detected at least one state variable and/or a variable dependent thereon with at least one setpoint state variable of the steering trapezoid (7), in order to detect an overload state in the steering trapezoid (7) and/or a change in the axle geometry.

2. The system according to Claim 1, **characterized**
a) **in that** the sensor device comprises an angle-measuring device (5) which is designed to detect a steering knuckle angle (α) of the steering trapezoid, and
b) **in that** the evaluation device (11) is designed to determine a current value of the toe-in as a function of the detected steering knuckle angle (α), and to compare said value with a setpoint value of the toe-in, in order to determine a change in the axle geometry.

3. The system according to Claim 2, **characterized**
a) **in that** the angle-measuring device (5) is designed to detect the steering knuckle angles (α) of the two steering knuckles (4) of the steering trapezoid (7), and
b) **in that** the evaluation device (11) is designed to determine the current value of the toe-in by means of averaged values of the steering knuckle angles (α) which are detected by the angle-measuring device (5) at a steering angle of zero.

4. The system according to Claim 2, **characterized**
a) **in that** the angle-measuring device (5) is designed to detect the steering knuckle angles (α) of the two steering knuckles (4) of the steering trapezoid (7), and
b) **in that** the evaluation unit (11) is designed to determine the current value of the toe-in by means of averaged values of the steering knuckle angles (α) which are detected at steering angles which are unequal to zero, wherein a steering lock which is caused by a steering angle which is unequal to zero is taken into account by means of a kinematic model of the steering kinematics during the determination of the toe-in.

5. The system according to Claim 2, **characterized**
a) **in that** the angle-measuring device (5) detects a first steering knuckle angle (α) on a side lying opposite the steering system, and the system is also designed to determine a steering angle, and
b) **in that** the evaluation unit (11) is designed to determine a second steering knuckle angle (α) on the side of the steering system as a function of the detected steering angle.

6. The system according to one of the preceding claims, **characterized**
a) **in that** the sensor device comprises a force sensor (6) which detects a force occurring in the steering trapezoid (7), and
b) **in that** the evaluation device (11) compares the detected force with a predetermined force threshold value, in order to determine an overload state in the steering trapezoid (7).

7. The system according to Claim 6, **characterized in that** the force sensor (6) detects a force (F) acting on the steering track rod (3).

8. The system according to Claim 6 or 7, **characterized in that** the evaluation unit (11) is designed to determine, after the force threshold value has been exceeded by the force (F) occurring in the steering trapezoid (7), whether an averaged force in the steering trapezoid (7) after the exceeding of the force threshold value, in particular in the case of straight-ahead travel, is greater than an averaged force in the steering trapezoid (7) which has been detected before the force threshold value is exceeded.

9. The system according to one of the preceding Claims 6 to 8, **characterized in that** the evaluation unit (11) determines the force threshold value as a function of a load state and/or an axle load of the vehicle.

10. The system according to one of the preceding Claims 7 to 9, **characterized in that** the evaluation unit forms a difference between the steering track rod forces in the case of forward travel and those in the case of rearward travel, and the force threshold value is a setpoint difference of the steering track rod forces (F) in the case of forward travel and in the case of rearward travel.

11. The system according to Claim 10, **characterized in that** the evaluation unit (11) uses steering track rod forces (F) in the case of forward travel and those in the case of rearward travel to form differences which occur in a predetermined speed range, wherein the predetermined speed range is defined in such a way that it corresponds to the typical speeds of manoeuvring movements.

12. The system according to one of the preceding claims, **characterized in that** the detection or use of sensor data to determine the overload state in the steering trapezoid (7) and/or the change in the axle geometry takes place only for driving states which do not bring about a high load on the chassis.

13. The system according to Claim 12, **characterized in that** a driving state with a high load on the chassis is a starting process and/or a braking process.

14. The system according to one of the preceding claims, **characterized in that** the system is configured to output a warning signal if a deviation of the at least one state variable from the at least one setpoint state variable exceeds a threshold value.

15. A vehicle, in particular utility vehicle, comprising a system for detecting a change in an axle adjustment according to one of Claims 1 to 14.

## Revendications

1. Système de détection d'une modification d'un réglage de géométrie d'essieu d'un véhicule automobile, en particulier de la modification du réglage de géométrie d'un essieu rigide, **caractérisé en ce que** le système comprend les caractéristiques suivantes:
- un dispositif de capteur, qui est disposé sur un trapèze de direction d'un châssis du véhicule automobile et est configuré pour détecter pendant la marche du véhicule au moins une grandeur d'état du trapèze de direction; et
- un dispositif d'évaluation (11), qui est configuré pour comparer ladite au moins une grandeur d'état et/ou une grandeur qui en dépend avec une grandeur d'état de consigne du trapèze de direction (7), afin de détecter un état de surcharge dans le trapèze de direction (7) et/ou une modification de la géométrie d'essieu.

2. Système selon la revendication 1, **caractérisé en ce que**
a) le dispositif de capteur comprend un dispositif de mesure d'angle (5), qui est configuré pour détecter un angle de fusée d'essieu (α) du trapèze de direction, et
b) le dispositif d'évaluation (11) est configuré pour déterminer une valeur actuelle du pinçage en fonction de l'angle de fusée d'essieu (α) détecté et de le comparer avec une valeur de consigne du pinçage, afin de constater une modification de la géométrie d'essieu.

3. Système selon la revendication 2, **caractérisé en ce que**
a) le dispositif de mesure d'angle (5) est configuré pour détecter les angles de fusée d'essieu (α) des deux fusées d'essieu (4) du trapèze de direction (7), et
b) le dispositif d'évaluation (11) est configuré pour déterminer la valeur actuelle du pinçage au moyen de valeurs moyennes des angles de fusée d'essieu (α), qui sont détectés pour un angle de braquage nul par le dispositif de mesure d'angle (5).

4. Système selon la revendication 2, **caractérisé en ce que**
a) le dispositif de mesure d'angle (5) est configuré pour détecter les angles de fusée d'essieu (α) des deux fusées d'essieu (4) du trapèze de direction (7), et
b) l'unité d'évaluation (11) est configurée pour déterminer la valeur actuelle du pinçage au moyen de valeurs moyennes des angles de fusée d'essieu (α), qui sont détectés pour des angles de braquage non nuls, dans lequel on tient compte d'un angle de roue dû à un angle de braquage non nul au moyen d'un modèle cinématique de la cinématique de direction lors de la détermination du pinçage.

5. Système selon la revendication 2, **caractérisé en ce que**
a) le dispositif de mesure d'angle (5) détecte un premier angle de fusée d'essieu (α) sur un côté opposé à l'installation de direction et le système est en outre configuré pour déterminer un angle de braquage, et
b) l'unité d'évaluation (11) est configurée pour déterminer un second angle de fusée d'essieu (α) sur le côté de l'installation de direction en fonction de l'angle de braquage détecté.

6. Système selon l'une quelconque des revendications précédentes, **caractérisé en ce que**
a) le dispositif de capteur comprend un détecteur de force (6), qui détecte une force apparaissant dans le trapèze de direction (7), et
b) le dispositif d'évaluation (11) compare la force détectée avec une valeur de seuil de force prédéterminée, afin de déterminer un état de surcharge dans le trapèze de direction (7).

7. Système selon la revendication 6, **caractérisé en ce que** le détecteur de force (6) détecte une force (F) agissant sur la barre de connexion (3).

8. Système selon la revendication 6 ou 7, **caractérisé en ce que** l'unité d'évaluation (11) est configurée pour déterminer, après un dépassement de la valeur de seuil de force par la force (F) apparaissant dans le trapèze de direction (7), si une force moyenne dans le trapèze de direction (7) après le dépassement de la valeur de seuil de force, en particulier en ligne droite, est supérieure à une force moyenne dans le trapèze de direction (7), qui a été détectée avant le dépassement de la valeur de seuil de force.

9. Système selon l'une quelconque des revendications précédentes 6 à 8, **caractérisé en ce que** l'unité d'évaluation (11) détermine la valeur de seuil de force en fonction d'un état de chargement et/ou d'une charge d'essieu du véhicule.

10. Système selon l'une quelconque des revendications précédentes 7 à 9, **caractérisé en ce que** l'unité d'évaluation forme une différence des forces sur la barre de connexion en cas de marche avant et arrière, et la valeur de seuil de force est une différence de consigne entre les forces (F) sur la barre de connexion en marche avant et arrière.

11. Système selon la revendication 10, **caractérisé en ce que** l'unité d'évaluation (11) utilise pour former la différence des forces (F) sur la barre de connexion en marche avant et arrière, qui apparaissent dans une plage de vitesse prédéterminée, dans lequel la plage de vitesse prédéterminée est fixée de telle manière que celle-ci corresponde aux vitesses typiques de parcours de manoeuvre.

12. Système selon l'une quelconque des revendications précédentes, **caractérisé en ce que** l'on n'effectue la détection ou l'utilisation de données de capteur pour la détermination de l'état de surcharge dans le trapèze de direction (7) et/ou de la modification de la géométrie d'essieu que pour des états de marche, qui n'entraînent pas de charge élevée pour le châssis.

13. Système selon la revendication 12, **caractérisé en ce qu'**un état de marche avec une charge élevée du châssis est une opération de démarrage et/ou de freinage.

14. Système selon l'une quelconque des revendications précédentes, **caractérisé en ce que** le système est conçu pour émettre un signal d'avertissement, dans le cas où un écart entre au moins une grandeur d'état et ladite au moins une grandeur d'état de consigne dépasse une valeur de seuil.

15. Véhicule, en particulier véhicule utilitaire, comprenant un système de détection d'une modification d'un réglage de géométrie d'essieu selon l'une quelconque des revendications 1 à 14.
